Europäisches Patentamt

European Patent Office

Office européen des brevets

(19)

(11) Veröffentlichungsnummer: **0 163 281**
**A2**

(12) # EUROPÄISCHE PATENTANMELDUNG

(21) Anmeldenummer: **85106485.7**

(22) Anmeldetag: **25.05.85**

(51) Int. Cl.⁴: **H 04 B 1/74**

(30) Priorität: **01.06.84 DE 3420365**

(43) Veröffentlichungstag der Anmeldung:
**04.12.85 Patentblatt 85/49**

(84) Benannte Vertragsstaaten:
**CH DE FR LI**

(71) Anmelder: **BBC Aktiengesellschaft Brown, Boveri & Cie.**
**Haselstrasse**
**CH-5401 Baden(CH)**

(72) Erfinder: **Dinges, Rudolf, Dipl.-Ing.**
**Lilienthalstrasse 4**
**D-6840 Lampertheim(DE)**

(74) Vertreter: **Kempe, Wolfgang, Dr. et al,**
**c/o Brown, Boveri & Cie AG Postfach 351**
**D-6800 Mannheim 1(DE)**

(54) **Verfahren zur Umschaltung zwischen redundanten Übertragungswegen.**

(57) Fü Einrichtungen zur selbsttätigen Umschaltung zwischen redundanten Übertragungswegen einer Fernwirkverbindung wird ein Verfahren zur Ermittlung der Verfügbarkeit der bertragungswege benötigt. Mit der Erfindung wird als Verfügbarkeitskriterium die Anzahl (F) fehlerfreier Dialoge (8) pro Zeiteinheit auf einer Übertragungsstrecke (2a bis 2f, 4a bis 4f) vorgeschlagen, wobei diese Anzahl (F) pro Zeiteinheit, die der Blockfehlerwahrscheinlichkeit annähernd entspricht, für alle redundanten Wege zu jedem Zeitpunkt ermittelt wird. Durch geeignete Gewichtung der Anzahl fehlerfreier und fehlerhafter Dialoge (8) kann ein gewünschtes Hystereseverhalten einer Umschalteinrichtung erreicht werden. Die Wiederverfügbarkeit einer zuvor gestörten Übertragungsstrecke (2a bis 2f, 4a bis 4f) wird erkannt.

Fig. 2

B R O W N , B O V E R I & C I E    AKTIENGESELLSCHAFT

Mannheim                                      29. Mai 1984

Mp.-Nr. 589/84                                ZPT/P3-Sf/Bt


Verfahren zur Umschaltung zwischen redundanten Übertragungswegen

Die Erfindung bezieht sich auf ein Verfahren zur Umschaltung zwischen redundanten Übertragungswegen einer
Fernwirkverbindung oder eines Fernwirknetzes nach dem
Oberbegriff des Anspruchs 1.

Fernwirkverbindungen sind Komponenten eines Netzleitsystems, die einen wesentlichen Einfluß auf die Gesamtverfügbarkeit des Systems haben. Da die Störanfälligkeit
von Fernwirkverbindungen bekannt ist, ist es üblich,
redundante Übertragungswege vorzusehen, wobei ein Übertragungsweg aus einer einzigen Übertragungsstrecke oder
aus einer Reihenschaltung von Übertragungsstrecken mit
zwischengeschalteten Fernwirkstationen bestehen kann.
Der kürzestes Übertragungsweg wird als Regelweg bezeichnet; die redundanten Wege sind Ersatzwege.

Um redundante Übertragungswege durch Umschaltung nutzen
zu können, muß der Ausfall eines Übertragungswegs
erkannt werden. Aus der Siemens-Druckschrift A19100-

589/84                    2                    0163281

E672-A2-V1 ist eine frequenzmodulierte Übertragungsanschaltung UBA bekannt, bei der eine Überwachung
des Empfangspegels vorgesehen ist, wodurch ein Trägerausfall erkannt wird. Aus der SEL-Druckschrift
21 28.11830,5.Be ist eine Wechselstromtelegraphie-Einrichtung WT 2920 zur Übertragung von Fernwirk- und Datensignalen bekannt, bei der ebenfalls der Empfangspegel
überwacht wird und ein Relais vorgesehen ist, mit dessen
Kontakt Ersatzwegschaltungen vorgenommen werden können.
Bei diesen bekannten Einrichtungen kann also nach Erkennen einer Kanalstörung durch Trägerausfall eine Umschaltung vorgenommen werden. Ein solches Verfahren, bei dem
allein ein Trägerausfall zur Umschaltung führt, ist jedoch zur Beurteilung der Qualität eines Übertragungsweges in einem Netzleitsystem nicht ausreichend, da andere
Einflüsse, die ein Datentelegramm verfälschen können,
außer Betracht bleiben und da bei diesem Verfahren der
Zeitbezug fehlt (Störungen pro Zeiteinheit).

Der Erfindung liegt deshalb die Aufgabe zugrunde, ein
Verfahren zur Umschaltung zwischen redundanten Übertragungswegen anzugeben, das die Nachteile der bekannten
Verfahren vermeidet.

Diese Aufgabe wird durch ein Verfahren nach dem Anspruch
1 gelöst. Vorteilhafte Ausgestaltungen sind in den Unteransprüchen angegeben.

Das erfindungsgemäße Verfahren hat den Vorteil, daß
durch die Feststellung der Anzahl von fehlerhaften Übertragungen pro Zeiteinheit ein gutes Verfügbarkeitskriterium für die Umschaltung auf redundante Übertragungswege zur Verfügung steht, das praktisch alle störenden
Einflüsse auf die Übertragung und deren Häufigkeit erfaßt.

Nach einer vorteilhaften Ausgestaltung wird die Anzahl der fehlerhaften Übertragungen durch einen periodischen Dialogverkehr auf der Übertragungsstrecke ermittelt, wobei die Anzahl der richtig empfangenen Telegramme quittiert wird und wobei der Dialogverkehr auch dann auf allen redundanten Strecken geführt wird, wenn keine Nutzdaten zu übertragen sind. Dadurch wird erreicht, daß einer die Umschaltung steuernden Station dauernd die Verfügbarkeit sämtlicher vorhandener Übertragungsstrecken gemeldet werden kann.

Nach einer weiteren vorteilhaften Ausgestaltung wird die Anzahl von fehlerfrei und fehlerhaft geführten Dialogen je Übertragungsstrecke in einem Zähler erfaßt und bei Erreichen eines bestimmten Zählerstandes eine Nichtverfügbarkeit des überwachten Übertragungsweges gemeldet. Dabei kann die Anzahl der fehlerfreien und fehlerhaften Dialoge durch unterschiedliche Zählbeträge unterschiedlich gewichtet werden, wodurch ein an die Besonderheiten der Fernwirkverbindung angepaßtes Verhalten der Umschalteinrichtung erreicht werden kann.

Nach einer weiteren vorteilhaften Ausgestaltung ist vorgesehen, daß nach Erreichen eines Zählerstandes, der einer Nichtverfügbarkeit der überwachten Übertragungsstrecke entspricht, fehlerfreie Dialoge mit einem erniedrigten Zählbetrag zu berücksichtigen, um eine Feststellung einer Wiederverfügbarkeit zu erreichen. Durch Wahl der Gewichtung eines fehlerhaften oder fehlerfreien Dialoges sowie des Zählerstandes, der eine Nichtverfügbarkeitsmeldung auslöst, kann ein bestimmtes Hystereseverhalten und eine bestimmte Dynamik einer verfahrensgemäßen automatisch arbeitenden Umschalteinrichtung herbeigeführt werden.

Eine genauere Beschreibung der Erfindung erfolgt anhand eines Ausführungsbeispiels und der Zeichnung.

589/84        4       0163281

Es zeigen:

Fig. 1    vermaschtes Fernwirknetz,

Fig. 2    Telegramm-Dialog auf einer Übertragungsstrecke,

Fig. 3    Hystereseverhalten einer Umschalteinrichtung
nach dem erfindungsgemäßen Verfahren.

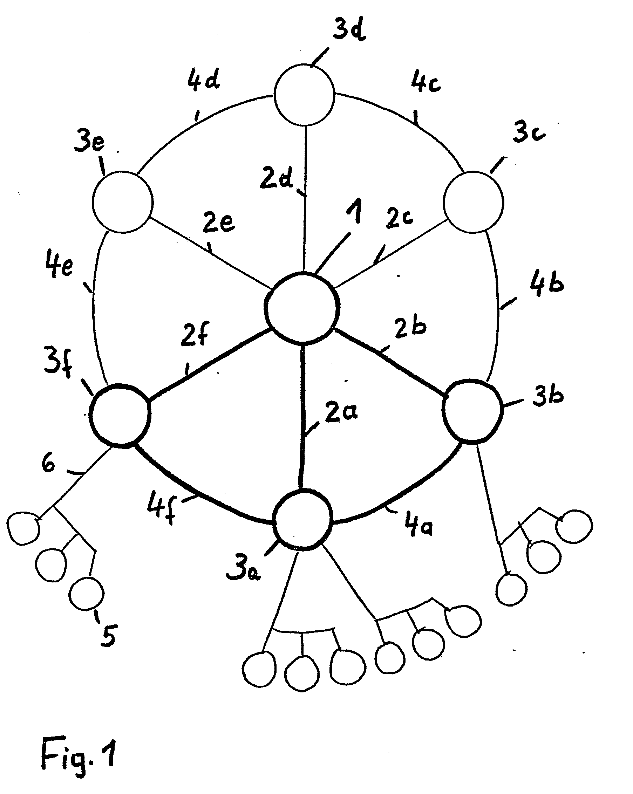

Fig. 1 zeigt ein vermaschtes Fernwirknetz mit einer Zentralstation 1, die sternförmig über Übertragungsstrecken
2a bis 2f mit mehreren Fernwirkstationen 3a bis 3f verbunden ist. Die Fernwirkstationen 3a bis 3f sind untereinander ringförmig über Verbindungsstrecken 4a bis 4f
verbunden. An die Fernwirkstationen 3a bis 3f sind Unterstationen 5 über Zubringersysteme 6 angeschlossen. In
diesem vermaschten Fernwirknetz steht z.B. für die Fernwirkstation 3a die Übertragungsstrecke 2a als Regelweg
zur Verfügung und ein erster Ersatzweg über die Verbindungsstrecke 4a, die Fernwirkstation 3b und die Übertragungsstrecke 2b, sowie ein zweiter Übertragungsweg
über die Verbindungsstrecke 4f, die Fernwirkstation 3f
und die Übertragungsstrecke 2f. Die Verfügbarkeit der
Übertragungsstrecken 2a bis 2f und der Verbindungsstrecken 4a bis 4f wird durch die Fernwirkstationen 3a
bis 3f ermittelt. Die Fernwirkstationen 3a bis 3f nehmen
dazu untereinander und mit der Zentrale 1 über ein vereinbartes Protokoll, ein Quittierverfahren, einen Datenaustausch vor. Auch wenn keine Nutzdaten zur Übertragung
anstehen, wird die Verfügbarkeit der Übertragungsstrecken durch einen periodisch geführten Dialog überwacht.

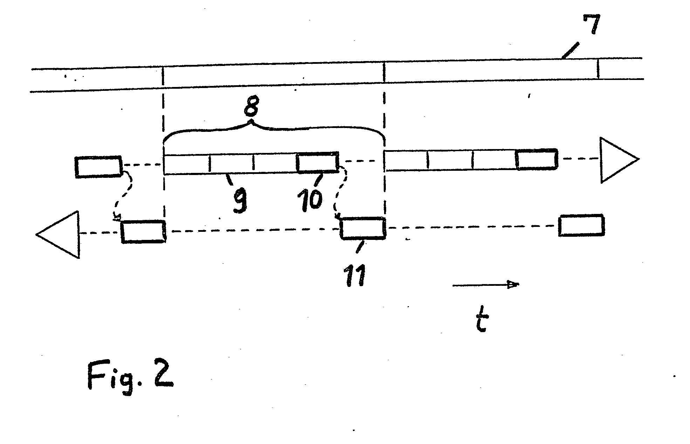

Dieser Dialog zwischen zwei Stationen 1, 3a bis 3f ist
in Fig. 2 beispielhaft dargestellt. In Fig. 2 ist ein
Zeitraster 7 dargestellt, das die Dauer eines Dialogs 8
angibt. Ein Dialog 8, der von einer Fernwirkstation z.B.

3a auf einer Strecke z.B. der Verbindungsstrecke 4a geführt wird, beginnt mit Nutzdatentelegrammen 9, an die
sich ein Anforderungstelegramm 10 anschließt. Mit dem
Anforderungstelegramm 10 wird die empfangende Station 3b
aufgefordert, in einem Quittungstelegramm 11 mitzuteilen, wieviele Telegramme 9 sie richtig empfangen hat.
Mit dem Quittungstelegramm 11, das in Gegenrichtung
übertragen wird, wird ein Dialog 8 abgeschlossen. Die
sendende Station z.B. 3a überwacht, ob ein Quittungstelegramm 11 eintrifft, prüft das Quittungstelegramm 11
und vergleicht die rückgemeldete Anzahl der richtig empfangenen Telegramme 9 mit der Anzahl der gesendeten Telegramme 9. Nur wenn ein Quittungstelegramm 11 richtig
empfangen wird und die richtige Anzahl von empfangenen
Telegrammen 9 enthält, gilt der Dialog als fehlerfrei
abgeschlossen.

Der beschriebene Dialog 8 wird von in der Zeichnung
nicht dargestellten Linienkopplern durchgeführt, von
denen in den Fernwirkstationen 3a bis 3f je angeschlossener Übertragungsstrecke 2a bis 2f bzw. Verbindungsstrecke 4a bis 4f ein Exemplar vorhanden ist. Auch in
der Zentrale 1 ist je Übertragungsstrecke 2a bis 2f ein
Linienkoppler vorhanden. In diesen Linienkopplern ist
jeweils ein Zähler eingerichtet, mit dem die Anzahl der
fehlerfreien bzw. fehlerhaften Dialoge 8 erfaßt wird.

Die Zähler werden bei Initialisierung auf Null gesetzt
und sind so eingerichtet, daß sie keine negativen Werte
annehmen können. Wird ein Dialog 8 als fehlerhaft erkannt, wird der Zähler um einen ersten Zählbetrag u
hochgezählt. Ein fehlerfrei geführter Dialog 8 führt zur
Verminderung des Zählerinhalts um einen zweiten Zählbetrag d soweit der Zählerinhalt nicht den Wert Null hat.

Erreicht der Zählerstand nach mehreren Dialogen 8 eine
Schwelle z, so wird die überwachte Strecke 2a bis 2f, 4a bis 4f, z.B. 2a, als nicht verfügbar gemeldet und eine Umschaltung der Übertragung der Nutzdaten auf einen verfügbaren anderen Übertragungsweg vorgenommen. Der als nicht verfügbar gemeldete Übertragungsweg z.B. Übertragungsstrecke 2a wird jedoch weiterhin durch einen Dialogverkehr mit Anforderungstelegramm 10 und Quittungstelegramm 11 überwacht. Dabei wird ein fehlerfreier Dialog 8 mit einem dritten Zählbetrag q zur Verminderung des Zählerstandes anstelle des vorherigen zweiten Zählbetrags d gezählt, wobei der dritte Zählbetrag q kleiner ist als der zweite Zählbetrag d. Durch den geringen Zählbetrag q wird ein Hystereseverhalten erreicht, wobei der Zählerstand bei entsprechend geringer Störung der Übertragung erst nach einiger Zeit zu Null wird und damit der Übertragungsweg wieder als verfügbar gemeldet wird. Danach werden fehlerfreie Dialoge 8 wieder mit dem größeren zweiten Zählbetrag d erfaßt.

Die Benutzung und Umschaltung der Übertragungswege im vermaschten Fernwirknetz erfolgt nach einer festgelegten Vereinbarung. Damit kann z.B. für die Fernwirkstation 3a festgelegt sein, daß mit erster Priorität der Regelweg, Übertragungsstrecke 2a benutzt wird und bei Ausfall des Regelwegs mit zweiter Priorität der linke Ersatzweg über Verbindungsstrecke 4f, Fernwirkstation 3f und Übertragungsstrecke 2f benutzt wird und nur falls auch dieser Weg nicht zur Verfügung steht mit dritter Priorität auf den rechten Ersatzweg über Verbindungsstrecke 4a, Fernwirkstation 3b und Übertragungsstrecke 2b umgeschaltet wird. Eine Umschaltung auf einen Ersatzweg erfolgt dabei nur dann, wenn der gesamte Ersatzweg bestehend aus Verbindungsstrecke z.B. 4f, Fernwirkstation z.B. 3f und Übertragungsstrecke z.B. 2f als verfügbar gemeldet ist. Der Fernwirkstation z.B. 3a wird deshalb ständig mit Hilfe eines Nutzdatentelegramms 9 der Status der von ihr nicht direkt überwachten Teile der Ersatzwege gemeldet, also z.B. der Fernwirkstation 3a die Verfügbarkeit der benachbarten Fernwirkstationen 3f und 3b sowie der zugehörigen Übertragungsstrecken 2f und 2b.

Das Zeitverhalten einer Überwachungseinrichtung nach dem erfindungsgemäßen Verfahren kann durch Parametrisierung der Zählbeträge u, d, q und der Schwelle z beeinflußt werden. Bei einer gegebenen Dauer des Dialogs 8 bestimmt z.B. das Verhältnis von Schwelle z zu erstem Zählbetrag u den frühesten Zeitpunkt der "Nichtverfügbarkeit".

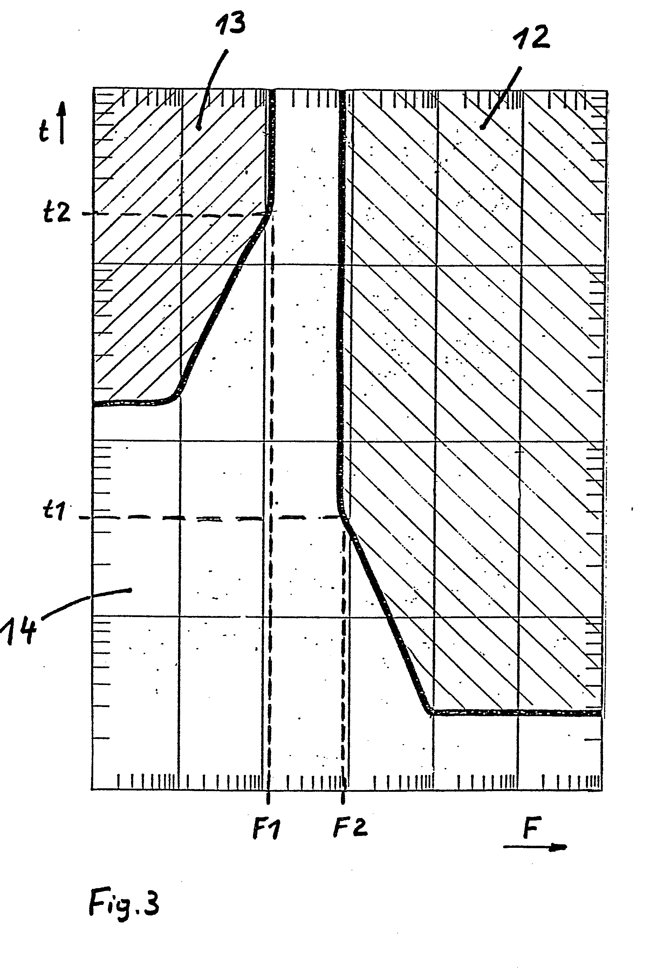

Fig. 3 zeigt beispielhaft das Hystereseverhalten der Überwachungseinrichtung bei Auslösung einer Nichtverfügbarkeitsmeldung und Rückschaltung auf eine Meldung "verfügbar" für bestimmte Zählbeträge u, d, q und Schwelle z. Dazu ist in Fig. 3 auf der Abszisse die Anzahl F der fehlerhaften Dialoge 8 pro Zeiteinheit aufgetragen, die näherungsweise der Blockfehlerwahrscheinlichkeit entspricht. Die Blockfehlerwahrscheinlichkeit gibt die Wahrscheinlichkeit an, daß ein Block fehlerhaft übertragen wird, unabhängig davon, ob der oder die Fehler erkannt worden sind. Die Anzahl F würde genau der Blockfehlerwahrscheinlichkeit entsprechen, wenn sichergestellt wäre, daß alle möglichen Blockfehler erkannt würden. Auf der Ordinate ist die Zeit t aufgetragen.

In Fig. 3 sind zwei Lesebeispiele eingetragen. Dabei ist einem ersten Lesebeispiel zu entnehmen, daß eine zuvor ungestörte Strecke 2a bis 2f, 4a bis 4f bei einer Anzahl F der fehlerhaften Dialoge 8 pro Zeiteinheit, die über der ersten eingetragenen Anzahl F2 liegt, spätestens nach einer ersten Zeit t1 zu einer Auslösung der Meldung der Nichtverfügbarkeit führt, weil dann ein Auslösebereich 12 erreicht wird.

Einem zweiten Lesebeispiel ist zu entnehmen, daß eine vorher gestörte Strecke 2a bis 2f, 4a bis 4f bei einer Anzahl F, die unter der eingetragenen zweiten Anzahl F1 liegt, spätestens nach einer zweiten Zeit t2 wieder als verfügbar gemeldet wird, weil dann ein Rückumschaltbereich 13 erreicht wird. Zwischen dem Auslösebereich 12 und dem Rückumschaltbereich 13 liegt ein undefinierter Bereich 14, der als Hysteresebereich wirkt und eine unnötig häufige Umschaltung der Übertragungswege verhindert.

Das erfindungsgemäße Verfahren ist selbstverständlich nicht auf die Anwendung in vermaschten Netzen beschränkt, sondern ist auch zur Umschaltung zwischen zwei redundanten Wegen geeignet.

A n s p r ü c h e

1. Verfahren zur Umschaltung zwischen redundanten Übertragungswegen einer Fernwirkverbindung oder eines Fernwirknetzes aufgrund eines Verfügbarkeitskriteriums, dadurch gekennzeichnet, daß als Verfügbarkeitskriterium eine festgestellte Anzahl von fehlerhaften Übertragungen pro Zeiteinheit herangezogen wird.

2. Verfahren nach Anspruch 1, dadurch gekennzeichnet, daß die Anzahl der fehlerhaften Übertragungen pro Zeiteinheit als Verfügbarkeitskriterium bei allen redundanten Übertragungswegen durch einen periodischen Dialogverkehr ermittelt wird, der auch dann auf den Übertragungsstrecken (2a bis 2f, 4a bis 4f) des Übertragungsweges geführt wird, wenn keine Nutzdaten zu übertragen sind.

3. Verfahren nach Anspruch 2, dadurch gekennzeichnet, daß in Stationen (1, 3a bis 3f), die die Umschaltung zwischen redundanten Übertragungswegen steuern, pro Übertragungsweg jeweils ein Zähler vorgesehen wird, der durch eine Initialisierung auf den Wert Null gesetzt wird und dessen Inhalt bei jedem fehlerhaften Dialog (8) um einen ersten Zählbetrag (u) erhöht und bei jedem fehlerfreien Dialog (8) um einen zweiten Zählbetrag (d) verringert wird, jedoch nicht unter den Wert Null, bis der Zählerstand eine Schwelle (z) erreicht und aufgrund dessen eine Nichtverfügbarkeitsmeldung ausgelöst wird, worauf eine Umschaltung auf einen verfügbaren Übertragungsweg vorgenommen wird.

4. Verfahren nach Anspruch 3, dadurch gekennzeichnet, daß nach Erreichen der Nichtverfügbarkeit eines Übertragungsweges der Inhalt des zugehörigen Zählers bei fehlerfreien Dialogen (8) jeweils um einen dritten Zählberag (q) anstelle um den zweiten Zählbetrag (d) verringert wird bis der Zählerstand Null erreicht ist, worauf eine Wiederverfügbarkeit des zuvor gestörten Übertragungsweges gemeldet wird, wobei der dritte Zählbetrag (q) geringer ist als der zweite Zählbetrag (d).

0163281

Fig.1

0163281

Fig. 2

0163281

Fig.3